# EUROPEAN PATENT SPECIFICATION

(11) **EP 3 978 879 B1**
(45) Date of publication and mention of the grant of the patent: **01.11.2023**
(21) Application number: 21198972.8
(22) Date of filing: 24.09.2021
(51) Int. Cl.: G01C 23/00, G08G 5/02

(54) **SYSTEMS AND METHODS FOR VISUALIZING AN ASSUMED LATERAL AND VERTICAL FLIGHT PATH ON AN AVIONIC DISPLAY**
SYSTEME UND VERFAHREN ZUR VISUALISIERUNG EINER ANGENOMMENEN LATERALEN UND VERTIKALEN FLUGBAHN AUF EINER AVIONIKANZEIGE
SYSTÈMES ET PROCÉDÉS PERMETTANT DE VISUALISER UNE TRAJECTOIRE DE VOL LATÉRALE ET VERTICALE ASSUMÉE SUR UN AFFICHAGE AVIONIQUE

(30) Priority: 01.10.2020 US 202017061060
(43) Date of publication of application: 06.04.2022
(73) Proprietor: Honeywell International Inc., Charlotte, NC 28202 (US)
(72) Inventor: BOUDA, Tomas, Charlotte, 28202 (US); MACHACKOVA, Petra, Charlotte, 28202 (US); DOPITA, Stepan, Charlotte, 28202 (US); LACKO, Ivan, Charlotte, 28202 (US)
(74) Representative: LKGlobal UK Ltd.

(56) References cited:
- US-A1- 2006 265 110
- US-A1- 2017 168 658
- US-A1- 2019 122 569

## Description

### TECHNICAL FIELD

The present disclosure relates generally to information presented by flight display systems on an aircraft during approach procedures. More particularly, embodiments of the present disclosure provide a visualization of an assumed lateral and vertical flight path on an avionic display for an aircraft performing energy management during an approach procedure, such as an approach to landing at an airport.

### BACKGROUND

Energy management of the aircraft during the approach is a topic of great concern in the aviation industry. As used herein, the term "energy management" relates, at least in part, to the kinetic energy of the aircraft (forward motion through space) and the potential energy of the aircraft (in reference to its height above aerodrome elevation). Proper execution of energy management can significantly reduce landing related incidents and thus improve overall safety statistics for the aviation industry.

However, energy management presents a complex technical problem, in part because it requires an algorithm that considers multiple parameters, e.g. speed, altitude, configuration, distance from the threshold, lateral and vertical route constraints, etc. Another aspect of this technical problem includes properly communicating the output of such an algorithm to end users, i.e., the flight crew/pilot. Various algorithms and commercial implementations have been published in the art, which can provide various styles of "outputs" for energy management support. Nonetheless, continued improvements to the presentation of information during an energy managed approach are desirable.

Accordingly, the present disclosure provides a technical solution in the form of flight display systems and methods that provide an improved human-machine interface (HMI) on an avionic display for an aircraft performing energy management during an approach procedure. Embodiments of the improved HMI provide a visualization of an assumed lateral and vertical flight path during performance of an approach procedure. Other desirable features and characteristics of the present invention will become apparent from the subsequent detailed description of the invention and the appended claims, taken in conjunction with the accompanying drawings and this background of the invention.

US2017168658 A1 discloses a flight display system, pertaining to energy management, wherein the embodiments are provided to assist the flight crew in performing the approach procedures, such as approach to landing at an airport.

### BRIEF SUMMARY

This summary is provided to describe select concepts in a simplified form that are further described in the Detailed Description.

Provided is a flight display system for providing a visualization of an assumed lateral and vertical flight path on an avionic display for an aircraft performing energy management during an approach procedure according to claim 1.

Also provided is a method for providing a visualization of an assumed lateral and vertical flight path on an avionic display for an aircraft performing energy management during an approach procedure according to claim 8.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and wherein:
FIG. 1 is a block diagram of a system for a flight display system for providing a visualization of an assumed lateral and vertical flight path on an avionic display for an aircraft performing energy management during an approach procedure, in accordance with an exemplary embodiment of the present disclosure;
FIG. 2 is a simplified illustration introducing features of a visualization of an assumed lateral and vertical flight path on an avionic display for an aircraft performing energy management during an approach procedure, in accordance with an exemplary embodiment of the present disclosure;
FIGS. 3-6 are more detailed illustrations showing varying aircraft locations for an aircraft performing energy management during an approach procedure, and the improved HMI provided by exemplary embodiments of the present disclosure; and
FIG. 7 is an exemplary flow diagram illustrating a method for generating an avionic display in accordance with the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As used herein, the term "display" refers broadly to any means or method for the distribution of information to a flight crew or other aircraft operator, whether visually, aurally, tactilely, or otherwise. Also, the term "final gate" means the final position where aircraft should be stabilized to continue the approach. In current aviation regulation, a stabilization gate of 1000 feet (ft.) above airport elevation is generally preferred during Instrument Meteorological Conditions (IMC) and 500 ft. above airport elevation during Visual Meteorological Condition (VMC). Also, as used herein, the final gate "which is considered by AStA" is selectable by the aircraft operator or OEM. In various embodiments, the final gate is selectable from among 1000 feet above the aerodrome elevation, 500 feet above the aerodrome elevation, a Final Approach Fix (FAF). In other embodiments, the final gate can include any other predefined height above the aerodrome elevation to stay on a safe site.

As mentioned, energy management presents a complex technical problem, in part because it is affected by multiple parameters, e.g. speed, altitude, configuration, distance from the threshold, lateral and vertical route constraints, etc. Another aspect of this technical problem includes properly communicating the output of such an algorithm to end user, i.e., the flight crew / pilot. Various algorithms and commercial implementations have been published in the art, which can provide various solutions for energy management, including various styles of "output" or feedback for a pilot to view. One example is commonly assigned U.S. patent application publication no. 2017/0168658 A1, the contents of which are incorporated by reference herein in their entirety.

In available solutions, when the aircraft does not follow the lateral or vertical (or neither the lateral nor vertical) flight plan from FMS (regardless of the reason), a provided algorithm embodied in a software or hardware program will determine and assume the most probable lateral/vertical path. This assumed lateral and vertical flight path might contain lateral turns as well as altitude changes on descent. Available solutions further use the assumed lateral path and the assumed vertical path to calculate and display optimum energy and critical energy indicators. However, a technical problem is presented, in that neither the assumed lateral path nor the assumed vertical path is depicted graphically on the INAV and VSD. In these scenarios, the optimum energy and critical energy indicators are depicted generally in front of the aircraft symbol, but not visually associated with the assumed flight path because the assumed flight path isn't depicted on the avionic display. This technical problem is a deficiency in a human-machine interface (HMI), as it can make it very difficult for a pilot to see a big picture of the descent situation, especially when the assumed flight path contains horizontal turns or altitude changes.

Provided embodiments provide a technical solution in the form of a flight display system that provides a visualization on an avionic display of the assumed lateral and vertical flight paths. Additionally, embodiments provide an optimum energy indicator, and a critical energy indicator, and position them each at respective applicable locations on the assumed lateral path and assumed vertical path. With these features, the present disclosure provides an objectively improved HMI.

Embodiments of the present disclosure build upon an algorithm in the Approach Stabilization Assistant (AStA) disclosed in the aforementioned U.S. patent application publication no. 2017/0168658 A1. The AstA algorithm is used to help the pilot to manage the aircraft energy during descent and approach so the aircraft will be stabilized at the final gate (defined above). Provided embodiments are compatible with the AStA and its algorithm that provides a graphical user interface (GUI) and specific graphical clues depicted on avionic displays, and which improve a pilot's awareness and understanding of the current energy state of the aircraft in comparison to the optimum and critical energy state for the given approach.

The AstA algorithm receives and processes the type of aircraft, flight plan, the weight of the aircraft, current weather conditions (at the aircraft and at the airport), aircraft configuration options and aircraft configuration status, the position of the aircraft with regard to the airport, standard approach procedures, and current airspeed.

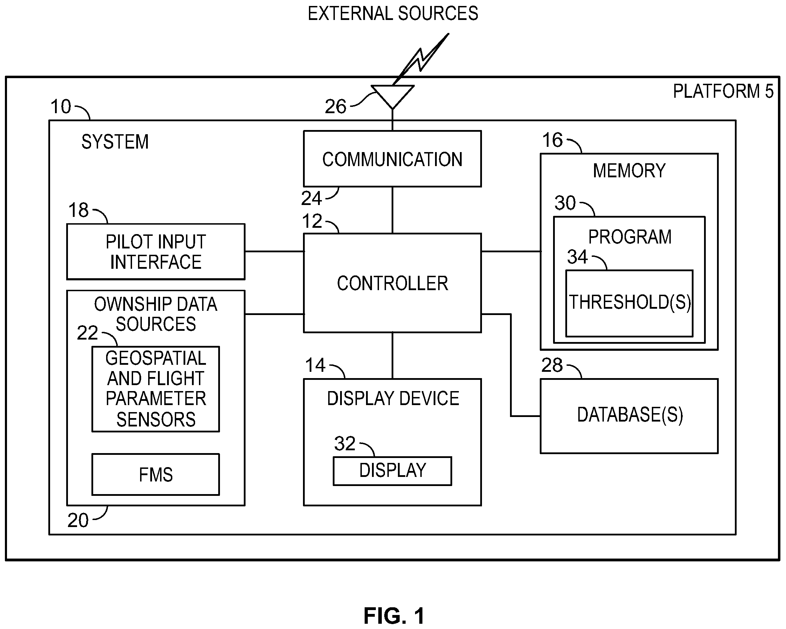

FIG. 1 is a block diagram of a system **10** for providing a visualization of an assumed lateral and vertical flight path on an avionic display for an aircraft performing energy management during an approach procedure (shortened herein to "system" **10**), as illustrated in accordance with an exemplary and non-limiting embodiment of the present disclosure. The system **10** may be utilized onboard a mobile platform **5** to provide visual guidance, as described herein. In various embodiments, the mobile platform is an aircraft **5,** which carries or is equipped with the system **10.** As schematically depicted in FIG. 1, the system **10** includes the following components or subsystems, each of which may assume the form of a single device or multiple interconnected devices: a controller circuit **12** operationally coupled to: at least one display device **14;** computer-readable storage media or memory **16**; an optional input interface **18,** and ownship data sources **20** including, for example, a flight management system (FMS) and an array of flight system status and geospatial sensors **22.**

In various embodiments, the system **10** may be separate from or integrated within: the flight management system (FMS) and/or a flight control system (FCS). Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the Aircraft **5.**

The term "controller circuit" (and its simplification, "controller"), broadly encompasses those components utilized to carry-out or otherwise support the processing functionalities of the system **10.** Accordingly, controller circuit **12** can encompass or may be associated with a programmable logic array, application specific integrated circuit or other similar firmware, as well as any number of individual processors, flight control computers, navigational equipment pieces, computer-readable memories (including or in addition to memory **16**), power supplies, storage devices, interface cards, and other standardized components. In various embodiments, controller circuit **12** embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit **12** may be programmed with and execute the at least one firmware or software program, for example, program **30,** that embodies an algorithm described herein for receiving and processing data to thereby display a visualization of an assumed lateral and vertical flight path on an avionic display for an aircraft **5,** and to accordingly perform the various process steps, tasks, calculations, and control/display functions described herein.

Controller circuit **12** may exchange data, including real-time wireless data, with one or more external sources **50** to support operation of the system **10** in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory **16** is a data storage that can encompass any number and type of storage media suitable for storing computer-readable code or instructions, such as the aforementioned software program **30,** as well as other data generally supporting the operation of the system **10.** Memory **16** may also store one or more threshold **34** values, for use by an algorithm embodied in software program **30.** Examples of threshold **34** values include margins of error for altitude deviations, airspeed deviations, and lateral deviations. One or more database(s) **28** are another form of storage media; they may be integrated with memory **16** or separate from it.

In various embodiments, aircraft-specific parameters and information for aircraft **5** may be stored in the memory **16** or in a database **28** and referenced by the program **30.** Non-limiting examples of aircraft-specific information includes an aircraft weight and dimensions, performance capabilities, configuration options, and the like.

In various embodiments, two- or three-dimensional map data may be stored in a database **28,** including airport features data, geographical (terrain), buildings, bridges, and other structures, street maps, and navigational databases, which may be updated on a periodic or iterative basis to ensure data timeliness. This map data may be uploaded into the database **28** at an initialization step and then periodically updated, as directed by either a program **30** update or by an externally triggered update.

Flight parameter sensors and geospatial sensors **22** supply various types of data or measurements to controller circuit **12** during Aircraft flight. In various embodiments, the geospatial sensors **22** supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, display device **14** can include any number and type of image generating devices on which one or more avionic displays **32** may be produced. When the system **10** is utilized for a manned Aircraft, display device **14** may be affixed to the static structure of the Aircraft cockpit as, for example, a Head Down Display (HDD) or Head Up Display (HUD) unit. In various embodiments, the display device **14** may assume the form of a movable display device (e.g., a pilot-worn display device) or a portable display device, such as an Electronic Flight Bag (EFB), a laptop, or a tablet computer carried into the Aircraft cockpit by a pilot.

At least one avionic display **32** is generated on display device **14** during operation of the system **10;** the term "avionic display" is synonymous with the term "aircraft-related display" and "cockpit display" and encompasses displays generated in textual, graphical, cartographical, and other formats. The system **10** can generate various types of lateral and vertical avionic displays **32** on which map views and symbology, text annunciations, and other graphics pertaining to flight planning are presented for a pilot to view. The display device **14** is configured to continuously render at least a lateral display showing the Aircraft **5** at its current location within the map data. The avionic display **32** generated and controlled by the system **10** can include graphical user interface (GUI) objects and alphanumerical input displays of the type commonly presented on the screens of MCDUs, as well as Control Display Units (CDUs) generally. Specifically, embodiments of avionic displays **32** include one or more two dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface **18** and a display device **14.** In various embodiments, the display device **14** is a touch screen display. In various embodiments, the human-machine interface also includes a separate pilot input interface **18** (such as a keyboard, cursor control device, voice input device, or the like), generally operationally coupled to the display device **14.** Via various display and graphics systems processes, the controller circuit **12** may command and control a touch screen display device **14** to generate a variety of graphical user interface (GUI) objects or elements described herein, including, for example, buttons, sliders, and the like, which are used to prompt a user to interact with the human-machine interface to provide user input; and for the controller circuit **12** to activate respective functions and provide user feedback, responsive to received user input at the GUI element.

In various embodiments, the system **10** may also include a dedicated communications circuit **24** configured to provide a real-time bidirectional wired and/or wireless data exchange for the controller **12** to communicate with the external sources **50** (including, each of traffic, air traffic control (ATC), satellite weather sources, ground stations, and the like ). In various embodiments, the communications circuit **24** may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit **24** is integrated within the controller circuit **12,** and in other embodiments, the communications circuit **24** is external to the controller circuit **12.** When the external source **50** is "traffic," the communications circuit **24** may incorporate software and/or hardware for communication protocols as needed for traffic collision avoidance (TCAS), automatic dependent surveillance broadcast (ADSB), and enhanced vision systems (EVS).

In certain embodiments of system **10,** the controller circuit **12** and the other components of the system **10** may be integrated within or cooperate with any number and type of systems commonly deployed onboard an aircraft including, for example, an FMS, and the aforementioned AstA.

The disclosed algorithm is embodied in a hardware program or software program (e.g. program **30** in controller circuit **12**) and configured to operate when the aircraft **5** is several thousand feet above (destination) aerodrome level (AAL), for example at least about 5000 ft. AAL, such as at least about 10000 ft. AAL, or more preferably at least about 15,000 ft. AAL. The algorithm provides flight crew instructions via the avionic display **32** down to 500 ft. AAL. This number is configurable, and can be changed anytime. In various embodiments, the disclosed algorithm may employ a 300 ft. AAL for a circling approach. The algorithm in program **30** also determines the available distance to go between the aircraft current position and the runway. This information can be read from aircraft flight management system (FMS) or it can be calculated independently by the algorithm. In various embodiments, a combination of these two is employed to provide even better results.

In various embodiments, the provided controller circuit **12** is integrated with the aforementioned AstA, and therefore its program **30** may incorporate the programming instructions necessary for: (a) the AstA algorithm, with rules for calculating, receiving and processing aircraft status data and aircraft configuration data, determining a current energy situation of the aircraft, and commanding the display device to render the navigation display and the VSD on the display device (e.g., the controller circuit **12** may determine the current energy situation of the aircraft based on a distance from a current position of the aircraft to a final gate or based on an airspeed of the aircraft); and (b) the human-machine interface (HMI) of the AstA, which controls the graphical user interface (GUI) presented on the display device **14.**

Because the present algorithm may incorporate the AstA algorithm, some aspects of the AstA are briefly referenced for convenience. First, the AstA algorithm is understood to calculate an optimum deceleration profile on given vertical or lateral path and provide, as part of a GUI on an avionic display, visual indicators to advise the flight crew regarding a configuration change (for example, extending flaps, speed brakes, and/or landing gear, etc.) to achieve the most energy efficient (e.g., with the lowest possible costs) and quiet approach while still assuring that the approach is stabilized and safe. The GUI is implemented as a graphical element on existing display system blocks, as a standalone display on an existing aircraft display, or as a standalone display running on an electronic flight-bag of the aircraft.

Next, the AstA algorithm is further understood to monitor aircraft parameters and offer non-standard corrective actions to allow the aircraft to reach a stabilized approach prior to the landing decision altitude (for example, 1000 feet AAL). For example, such non-standard corrective actions include, but are not limited to, the use of speed-brakes, an early landing gear extension, and/or level flight deceleration.

Additionally, the AstA algorithm further evaluates whether the aircraft is able to meet the stabilized approach criteria even with the use of non-standard corrective actions. In the event that even these actions are calculated to be insufficient to bring the aircraft to a stabilized approach prior to reaching the minimum decent altitude, the GUI provides an indication and advises the crew to commence a go around procedure.

And finally, the AstA algorithm, when executed by the controller circuit **12,** generates and renders a graphical user interface (GUI) on the display device **14.** The GUI comprises a plurality of GUI objects, including a current aircraft position symbol indicative of a current position of the aircraft **5.**

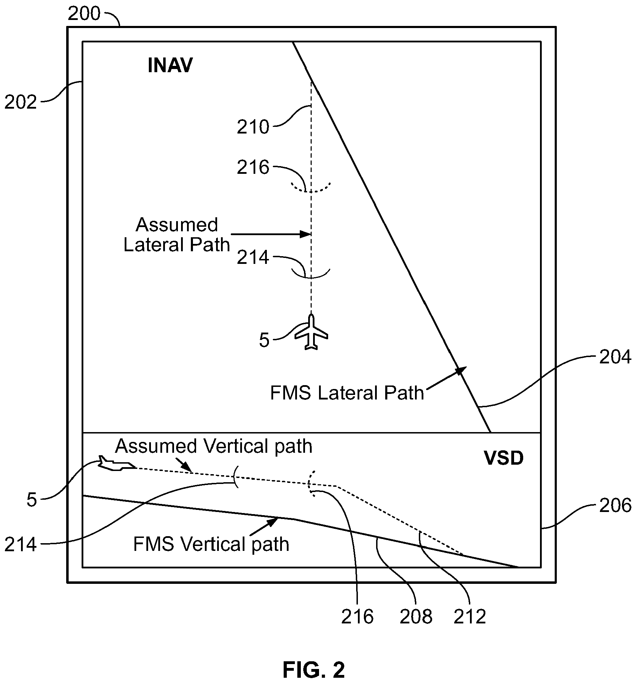

The present invention builds upon the AstA GUI as follows. Turning now to FIG. 2, a simplified illustration is used to introduce features of a visualization of an assumed lateral and vertical flight path on an avionic display for an aircraft performing energy management during an approach procedure. During operation, the controller circuit **12,** which is programmed by programming instructions to receive and process aircraft status data and aircraft configuration data, determines a current energy situation of the aircraft, and commands the display device to render the navigation display and the VSD. Avionic display **200** includes a horizontal or navigation display (INAV) **202** and a vertical situation display (VSD) **206**. The controller circuit **12** determined that the aircraft **5** is not on the FMS lateral path **204,** nor is it on the FMS vertical path **208**. Responsive thereto, the controller circuit **12** constructs an assumed lateral path and an assumed vertical path.

The controller circuit **12** generates a first graphical user interface (GUI) object representing the assumed lateral path **210** when the aircraft is not on the FMS lateral path. The controller circuit **12** generates a second graphical user interface (GUI) object representing the assumed vertical path **212** when the aircraft is not on the FMS vertical path. The first GUI object and the second GUI object are rendered on the existing avionic display **32** in the INAV **202** and in the VSD **206.** As can be seen in FIG. 2, the concurrently visually displayed presentation (i.e., the visualization) of these assumed paths is an objective improvement in the HMI, as one can immediately see where the aircraft is with respect to assumed geometrical trajectory and its targets.

As mentioned, and based on the AstA algorithm included within program **30,** the controller circuit **12** is programmed to determine an optimum energy position **214** on the descent, defined as a position, from which the aircraft will decelerate to the speed for optimum configuration change.. The controller circuit **12** is also programmed to determine a critical energy position **216** on the descent, defined as a position, from which the aircraft will decelerate to the speed for critical configuration change, wherein the critical configuration represents a maximum drag configuration of the aircraft that is greater than the optimum configuration and involves the extension of each of: flaps, airbrakes, and landing gear, the critical energy position represents a position after which, regardless of aircraft configuration, the aircraft can no longer arrive at the final gate in the energy-stabilized manner.

The controller circuit **12** selects a presentation style from among a plurality of presentation styles for rendering indicators for these positions, i.e., an optimum energy indicator and a critical energy indicator. In various embodiments, the selected presentation style for the critical energy indicator and the optimum energy indicator includes rendering the indicators as one of an arc, a line, a chevron, and a diamond; however, other presentation styles may be utilized. In various embodiments, the critical energy indicator is rendered with a heavier line weight than the optimum energy indicator.

Going beyond the AstA algorithm, the program **30** comprises rules, which when executed by the controller circuit **12,** cause the controller circuit to render the optimum energy indicator **214,** as an overlay, on each of the first GUI object and the second GUI object; and, render the critical energy indicator **216,** as an overlay, on each of the first GUI object and the second GUI object. The controller circuit **12** is further programmed to locate the optimum energy indicator **214** and the critical energy indicator **216** on the GUI object for the respective assumed paths in relative positions with respect to the current aircraft position symbol and respective assumed path, based on the current energy situation. The rendering is done in accordance with the selected presentation style. As can be seen in FIG. 2, the additional overlay of the indicators directly on the visualized assumed paths is another objective improvement in the HMI, as one can immediately see exactly where configuration changes are to be made.

In various embodiments, the controller circuit **12** determines when the aircraft **5** has descended to the final gate; and stops rendering the critical energy indicator and the optimum energy indicator when the aircraft has descended to 500 feet AAL at the final gate. In various embodiments, the controller circuit **12** determines when the aircraft **5** has ascended to 1000 feet above aerodrome level (AAL) at the final gate; and stops rendering the critical energy indicator and the optimum energy indicator when the aircraft has descended to 1000 feet AAL at the final gate.

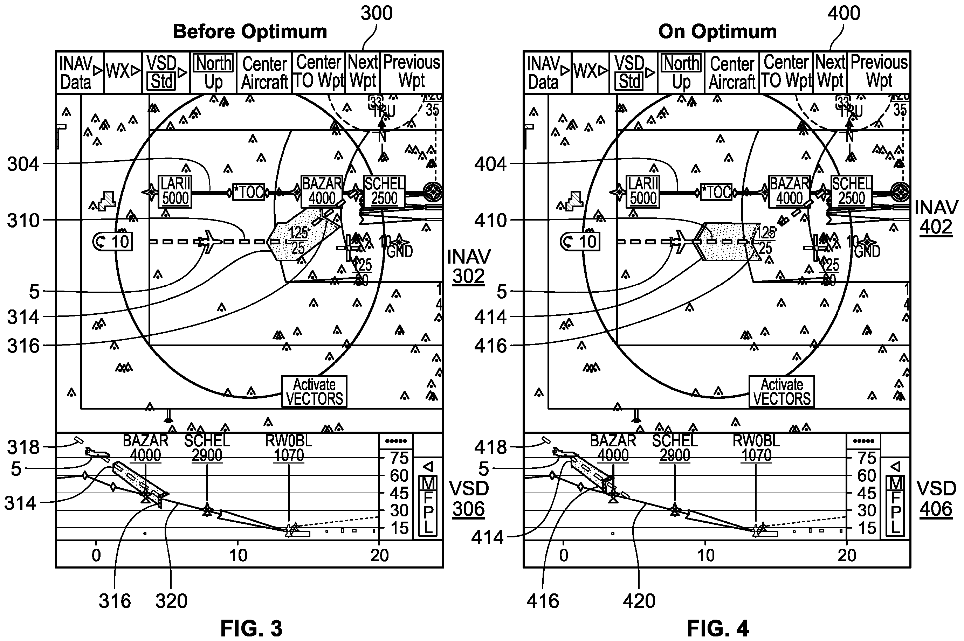

FIGS. 3-6 are more detailed illustrations showing varying aircraft **5** locations and the improved HMI provided by system **10.** FIGS. 3-6 comprise additional GUI information such as terrain data. Avionic display **300** includes INAV **302** and VSD **306.** The FMS lateral path304 and the FMS vertical path **320** are shown. Aircraft **5** is shown on assumed lateral path **310** and assumed vertical path **318.** The optimum energy indicator **314** is a chevron of a first line width and the critical energy indicator **316** is a chevron with a second line width that is thicker than the first line width. An area connecting the optimum energy indicator **314** and the critical energy indicator **316** is shown shaded, and further, one can see it lightly shaded where it is closest to the optimum energy indicator **314,** and the shading becomes darker where it is closest to the critical energy indicator **316.** The shading is one of many available presentation styles.

Avionic display **400** includes INAV **402** and VSD **406.** The FMS lateral path **404** and the FMS vertical path **420** are shown. Aircraft **5** is shown on assumed lateral path **410** and assumed vertical path **418.** The optimum energy indicator **414** is a chevron of a first line width and the critical energy indicator **416** is a chevron with a second line width that is thicker than the first line width. An area connecting the optimum energy indicator **414** and the critical energy indicator **416** is shown shaded, and further, one can see it lightly shaded where it is closest to the optimum energy indicator **414,** and the shading becomes darker where it is closest to the critical energy indicator **416.**

Avionic display **500** includes INAV **502** and VSD **506.** The FMS lateral path **504** and the FMS vertical path **520** are shown. Aircraft **5** is shown on assumed lateral path **510** and assumed vertical path **518.** The optimum energy indicator **514** is a chevron of a first line width and the critical energy indicator **516** is a chevron with a second line width that is thicker than the first line width. An area connecting the optimum energy indicator **514** and the critical energy indicator **516** is shown shaded, and further, one can see it lightly shaded where it is closest to the optimum energy indicator **514,** and the shading becomes darker where it is closest to the critical energy indicator **516.**

Avionic display **600** includes INAV **602** and VSD **606.** The FMS lateral path **604** and the FMS vertical path **620** are shown. Aircraft **5** is shown on assumed lateral path **610** and assumed vertical path **618.** The optimum energy indicator **614** is a chevron of a first line width and the critical energy indicator **616** is a chevron with a second line width that is thicker than the first line width. An area connecting the optimum energy indicator **614** and the critical energy indicator **616** is shown shaded, and further, one can see it lightly shaded where it is closest to the optimum energy indicator **614,** and the shading becomes darker where it is closest to the critical energy indicator **616.**

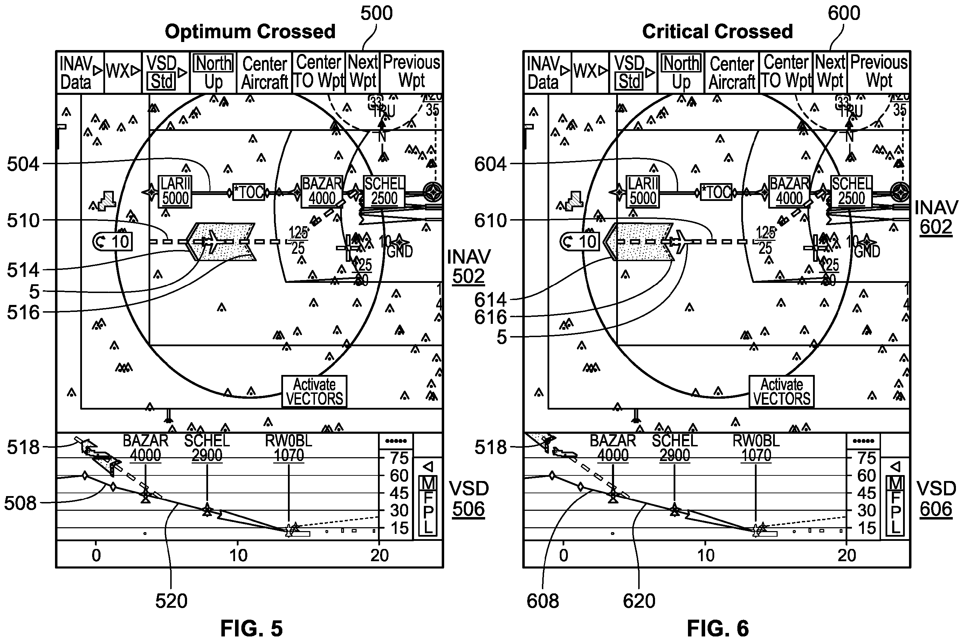

Viewing FIGS. 3-6 as a sequence, one can see the avionic display 32 for the aircraft **5** flying prior to the optimum energy indicator **314,** then approaching the optimum energy indicator **414,** then in between the optimum energy indicator **514** and the critical energy indicator **516,** and then, in FIG. 6, the aircraft **5** has flown past the critical energy indicator **516.** As alluded to, the guidance provided to the pilot at the optimum energy indicator **514** and the guidance provided to the pilot at the critical energy indicator **516** are vital to an aircraft performing energy management during an approach procedure. Viewing FIGS. 3-6 as a sequence allow one to observe the improved HMI provided to a pilot by the present invention during this critical procedure.

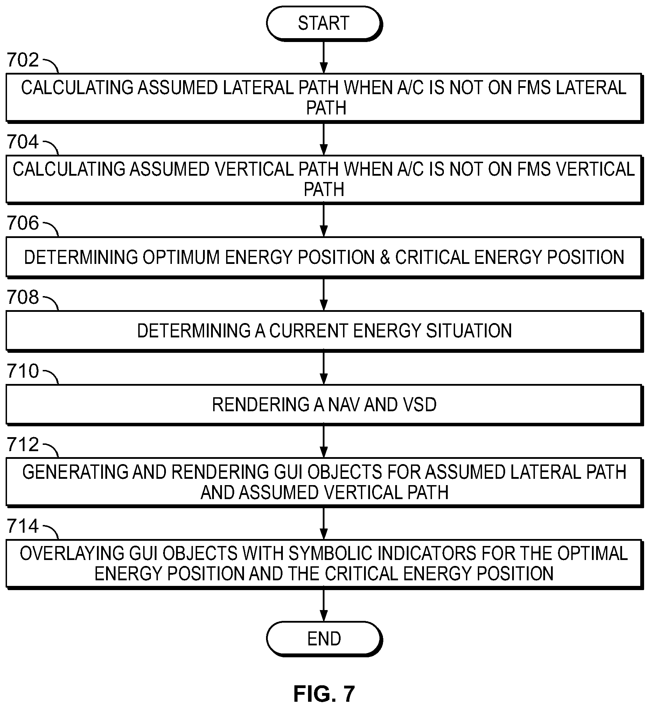

In an embodiment, as shown in FIG. 7, a flow diagram is provided illustrating a method **700** for generating a flight display in accordance with the present disclosure. At **702,** the method calculates an assumed lateral path when the aircraft is not on FMS lateral path. At **704** the method calculates an assumed vertical path when the aircraft is not on FMS vertical path.

At **706** an aircraft an optimum energy position and an aircraft critical energy position are determined using the algorithm. At **708,** an aircraft current energy situation is determined using the algorithm.

At **710,** avionic displays of the type NAV and VSD are rendered on a display device **14.** At **712,** generating and rendering GUI objects for assumed lateral path and assumed vertical path are performed.

At **714,** the method performs the process of overlaying GUI objects with symbolic indicators for the optimal energy position and the critical energy position.

As stated above, in various embodiments, some of the tasks performed in **702** to **710** are handled by an AstA algorithm, and the remaining steps operate on output from the AstA algorithm.

At **712,** the algorithm utilizes the calculated paths from step **702** and step **704** to generate and render a GUI object for the assumed lateral path and generate and render a GUI object for the assumed vertical path. At **714,** the algorithm renders the GUI objects on an existing GUI on the NAV and the VSD.

At **716,** the algorithm overlays the GUI objects generated in **714** with symbolic indicators to show the location of the optimum energy position and the location of the critical energy position. In various embodiments, the algorithm monitors altitude and stops the rendering of the indicators based on a current altitude of the aircraft.

As such, disclosed herein is flight display system for providing a visualization of an assumed lateral and vertical flight path on an avionic display for an aircraft performing energy management during an approach procedure. The system **10** improves upon available algorithms by providing a visualization of an assumed lateral and vertical flight path to assist the flight crew in making adjustments to the configuration of the aircraft when the aircraft is making an approach to an airport. Thus, the system **102** provides an objectively improved human-machine interface (HMI).

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It is being understood that various changes may be made in the function and arrangement of elements described in an exemplary embodiment without departing from the scope of the invention as set forth in the appended claims.

## Claims

1. A flight display system for providing a visualization of an assumed lateral and vertical flight path on an avionic display for an aircraft performing energy management during an approach procedure, comprising:
a flight management system (FMS);
a source of aircraft status data;
a display device capable of rendering a navigation display and a vertical situation display (VSD); and
a controller circuit coupled to the FMS, the source of aircraft status data, and the display device, the controller circuit programmed by programming instructions to receive and process aircraft status data and aircraft configuration data, determine a current energy situation of the aircraft, and to command the display device to render the navigation display and the VSD, the controller circuit further programmed to:
determine an optimum energy position on the descent, defined as a position for employing an optimum configuration for energy on the descent, as a function of the current energy situation;
determine a critical energy position on the descent, defined as a position for changing an aircraft configuration to a final configuration, wherein the final configuration represents a maximum drag configuration of the aircraft that is greater than the optimum configuration and involves the extension of each of: flaps, airbrakes, and landing gear, the critical energy position represents a position after which, regardless of aircraft configuration, the aircraft can no longer arrive at the final approach gate in the energy-stabilized manner;
determine when the aircraft is not on an FMS lateral path;
calculate an assumed lateral path when the aircraft is not on the FMS lateral path;
generate a first graphical user interface (GUI) object representing the assumed lateral path when the aircraft is not on the FMS lateral path;
render the first GUI object on the navigation display;
determine when the aircraft is not on an FMS vertical path;
calculate an assumed vertical path when the aircraft is not on the FMS vertical path;
generate a second graphical user interface (GUI) object representing the assumed vertical path when the aircraft is not on the FMS vertical path;
render the second GUI on the VSD;
select a presentation style from among a plurality of presentation styles for rendering an optimum energy indicator and a critical energy indicator;
render the optimum energy indicator, as an overlay, on each of the first GUI object and the second GUI object; and
render the critical energy indicator, as an overlay, on each of the first GUI object and the second GUI object, wherein the first GUI object and the second GUI object are two of a plurality of GUI objects making up a graphical user interface (GUI) rendered on the display device by the controller circuit, the GUI further comprises a current aircraft position symbol indicative of a current position of the aircraft, and wherein:
the controller circuit is further programmed to locate the optimum energy indicator and the critical energy indicator on the GUI in relative positions with respect to the current aircraft position symbol and respective assumed path, based on the current energy situation.

2. The flight display system of claim 1, wherein the controller circuit determines the current energy situation of the aircraft based on a distance from a current position of the aircraft to a final gate or based on an airspeed of the aircraft.

3. The flight display system of claim 1, wherein the GUI is implemented as a graphical element on existing display system blocks, as a standalone display on an existing aircraft display, or as a standalone display running on an electronic flight-bag of the aircraft.

4. The flight display system of claim 1, wherein the selected presentation style for the critical energy indicator and the optimum energy indicator includes rendering the indicators as one of an arc, a line, a chevron, and a diamond.

5. The flight display system of claim 4, wherein the critical energy indicator is rendered with a heavier line weight than the optimum energy indicator.

6. The flight display system of claim 4, wherein the controller circuit is further configured to:
determine when the aircraft has descended to the final gate; and
stop rendering the critical energy indicator and the optimum energy indicator when the aircraft has descended to the final gate.

7. The flight display system of claim 4, wherein the controller circuit is further configured to:
determine when the aircraft has ascended to 1000 feet above aerodrome level (AAL) at the final gate; and
stop rendering the critical energy indicator and the optimum energy indicator when the aircraft has descended to 1000 feet AAL at the final gate.

8. A method for providing a visualization of an assumed lateral and vertical flight path on an avionic display for an aircraft performing energy management during an approach procedure, comprising:
at a controller circuit programmed by programming instructions,
receiving and processing aircraft status data and aircraft configuration data, determining a current energy situation of the aircraft, and commanding a display device to render a navigation display and a VSD;
determining an optimum energy position on the descent, defined as a position, from which the aircraft will decelerate to a speed for an optimum configuration change;
determining a critical energy position on the descent, defined as a position, from which the aircraft will decelerate to a speed for a change to a critical configuration, wherein the critical configuration represents a maximum drag configuration of the aircraft that is greater than the optimum configuration and involves the extension of each of: flaps, airbrakes, and landing gear, the critical energy position represents a position after which, regardless of aircraft configuration, the aircraft can no longer arrive at the final approach gate in the energy-stabilized manner;
determining when the aircraft is not on an FMS lateral path;
calculating an assumed lateral path when the aircraft is not on the FMS lateral path;
generating a first graphical user interface (GUI) object representing the assumed lateral path when the aircraft is not on the FMS lateral path;
rendering the first GUI object on the navigation display;
determining when the aircraft is not on an FMS vertical path;
calculating an assumed vertical path when the aircraft is not on the FMS vertical path;
generating a second graphical user interface (GUI) object representing the assumed vertical path when the aircraft is not on the FMS vertical path;
rendering the second GUI on the VSD;
selecting a presentation style from among a plurality of presentation styles for rendering an optimum energy indicator and a critical energy indicator;
rendering the optimum energy indicator, as an overlay, on each of the first GUI object and the second GUI object; and
rendering the critical energy indicator, as an overlay, on each of the first GUI object and the second GUI object,
wherein the first GUI object and the second GUI object are two of a plurality of GUI objects making up a graphical user interface (GUI) rendered on the display device by the controller circuit,
the GUI further comprises a current aircraft position symbol indicative of a current position of the aircraft, and further comprising locating the optimum energy indicator and the critical energy indicator on the GUI in relative positions with respect to the current aircraft position symbol and respective assumed path, based on the current energy situation.

9. The method of claim 8, wherein the selected presentation style for the critical energy indicator and the optimum energy indicator includes rendering the indicators as one of an arc, a line, a chevron, and a diamond.

10. The method of claim 8, wherein the critical energy indicator is rendered with a heavier line weight than the optimum energy indicator.

11. The method of claim 9, further comprising implementing the GUI as a graphical element on existing display system blocks, as a standalone display on an existing aircraft display, or as a standalone display running on an electronic flight-bag of the aircraft.

12. The method of claim 10, further comprising determining the current energy situation of the aircraft based on a distance from a current position of the aircraft to a final gate or based on an airspeed of the aircraft.

13. The method of claim 12, further comprising:
determining when the aircraft has descended to the final gate; and
stopping rendering the critical energy indicator and the optimum energy indicator when the aircraft has descended to the final gate.

## Patentansprüche

1. Fluganzeigesystem zum Bereitstellen einer Visualisierung einer angenommenen lateralen und vertikalen Flugbahn auf einer Avionikanzeige für ein Flugzeug, das während eines Anflugvorgangs Energiemanagement durchführt, umfassend:
ein Flugsicherungssystem (FMS);
eine Quelle für Flugzeugstatusdaten;
eine Anzeigevorrichtung, die eine Navigationsanzeige und eine Vertikalsichtanzeige (VSD) wiedergeben kann; und
eine Steuerungsschaltung, die mit dem FMS, der Quelle von Flugzeugstatusdaten, und der Anzeigevorrichtung gekoppelt ist, wobei die Steuerungsschaltung durch Programmieranweisungen programmiert ist, um Flugzeugstatusdaten und Flugzeugkonfigurationsdaten zu empfangen und zu verarbeiten, eine aktuelle Energiesituation des Flugzeugs zu bestimmen und um die Anzeigevorrichtung anzuweisen, die Navigationsanzeige und das VSD wiederzugeben, wobei die Steuerungsschaltung ferner programmiert ist zum:
Bestimmen einer optimalen Energieposition beim Sinkflug, definiert als eine Position zum Einsatz einer optimalen Energiekonfiguration beim Sinkflug, in Abhängigkeit von der aktuellen Energiesituation;
Bestimmen einer kritischen Energieposition beim Sinkflug, definiert als eine Position zum Ändern einer Flugzeugkonfiguration in eine Endkonfiguration, wobei die Endkonfiguration eine Konfiguration des maximalen Luftwiderstands des Flugzeugs darstellt, die größer als die optimale Konfiguration ist, und das Ausfahren einschließt von jedem von: Klappen, Luftbremsen und Fahrwerk, die kritische Energieposition eine Position darstellt, nach der das Flugzeug unabhängig von der Flugzeugkonfiguration nicht mehr energiestabilisiert am Endanflug-Gate ankommen kann;
Bestimmen, wann sich das Flugzeug nicht auf einer lateralen FMS-Bahn befindet;
Berechnen einer angenommenen lateralen Bahn, wenn sich das Flugzeug nicht auf der lateralen FMS-Bahn befindet;
Erzeugen eines ersten grafischen Benutzeroberflächenobjekts (GUI-Objekts), das die angenommene laterale Bahn darstellt, wenn sich das Flugzeug nicht auf der lateralen FMS-Bahn befindet;
Wiedergeben des ersten GUI-Objekts auf der Navigationsanzeige;
Bestimmen, wann sich das Flugzeug nicht auf einer vertikalen FMS-Bahn befindet;
Berechnen einer angenommenen vertikalen Bahn, wenn sich das Flugzeug nicht auf der vertikalen FMS-Bahn befindet;
Erzeugen eines zweiten grafischen Benutzeroberflächenobjekts (GUI-Objekts), das die angenommene vertikale Bahn darstellt, wenn sich das Flugzeug nicht auf der vertikalen FMS-Bahn befindet;
Wiedergeben der zweiten GUI auf dem VSD;
Auswählen eines Präsentationsstils aus einer Mehrzahl von Präsentationsstilen zum Wiedergeben eines Indikators für optimale Energie und eines Indikators für kritische Energie;
Wiedergeben des Indikators für optimale Energie als Overlay auf dem ersten GUI-Objekt und dem zweiten GUI-Objekt; und
Wiedergeben des Indikators für kritische Energie als Overlay auf dem ersten GUI-Objekt und dem zweiten GUI-Objekt, wobei das erste GUI-Objekt und das zweite GUI-Objekt zwei von einer Mehrzahl von GUI-Objekten sind, die eine grafische Benutzeroberfläche (GUI) bilden, die von der Steuerungsschaltung auf der Anzeigevorrichtung wiedergegeben wird, wobei die GUI ferner ein aktuelles Flugzeugpositionssymbol umfasst, das eine aktuelle Position des Flugzeugs angibt, und wobei:
die Steuerungsschaltung ferner programmiert ist zum Lokalisieren des Indikators für optimale Energie und des Indikators für kritische Energie auf der GUI in relativen Positionen in Bezug auf das aktuelle Flugzeugpositionssymbol und der jeweiligen angenommenen Bahn basierend auf der aktuellen Energiesituation.

2. Fluganzeigesystem nach Anspruch 1, wobei die Steuerungsschaltung die aktuelle Energiesituation des Flugzeugs basierend auf einer Entfernung von einer aktuellen Position des Flugzeugs zu einem End-Gate oder basierend auf einer Fluggeschwindigkeit des Flugzeugs bestimmt.

3. Fluganzeigesystem nach Anspruch 1, wobei die GUI als grafisches Element auf vorhandenen Anzeigesystemblöcken, als eigenständige Anzeige auf einer vorhandenen Flugzeuganzeige oder als eigenständige Anzeige implementiert ist, die auf einem elektronischen Pilotenkoffer des Flugzeugs läuft.

4. Fluganzeigesystem nach Anspruch 1, wobei der ausgewählte Präsentationsstil für den Indikator für kritische Energie und den Indikator für optimale Energie das Wiedergeben der Indikatoren als einen von einem Bogen, einer Linie, einem Chevron oder einer Raute umfasst.

5. Fluganzeigesystem nach Anspruch 4, wobei der Indikator für kritische Energie mit einer stärkeren Linienstärke wiedergegeben wird als der Indikator für optimale Energie.

6. Fluganzeigesystem nach Anspruch 4, wobei die Steuerungsschaltung ferner konfiguriert ist zum:
Bestimmen, wann das Flugzeug zum End-Gate abgesunken ist; und
Stoppen des Wiedergebens der Anzeige des Indikators für kritische Energie und des Indikators für optimale Energie, wenn das Flugzeug zum End-Gate abgesunken ist.

7. Fluganzeigesystem nach Anspruch 4, wobei die Steuerungsschaltung ferner konfiguriert ist zum:
Bestimmen, wann das Flugzeug am End-Gate auf 1000 Fuß über Flugplatzhöhe (AAL, above aerodrome level) aufgestiegen ist; und
Stoppen des Wiedergebens der Anzeige des Indikators für kritische Energie und des Indikators für optimale Energie, wenn das Flugzeug auf 1000 Fuß über AAL am End-Gate abgesunken ist.

8. Verfahren zum Bereitstellen einer Visualisierung einer angenommenen lateralen und vertikalen Flugbahn auf einer Avionikanzeige für ein Flugzeug, das während eines Anflugvorgangs Energiemanagement durchführt, umfassend:
an einer durch Programmieranweisungen programmierten Steuerungsschaltung,
Empfangen und Verarbeiten von Flugzeugstatusdaten und Flugzeugkonfigurationsdaten, Bestimmen einer aktuellen Energiesituation des Flugzeugs und Anweisen einer Anzeigevorrichtung, eine Navigationsanzeige und ein VSD zu rendern;
Bestimmen einer optimalen Energieposition beim Sinkflug, definiert als eine Position, von der aus das Flugzeug auf eine Geschwindigkeit für eine optimale Konfigurationsänderung abbremst;
Bestimmen einer kritischen Energieposition beim Sinkflug, definiert als eine Position, von der aus das Flugzeug auf eine Geschwindigkeit für einen Wechsel in eine kritische Konfiguration abbremst, wobei die kritische Konfiguration eine maximale Widerstandskonfiguration des Flugzeugs darstellt, die größer als die optimale Konfiguration ist, und das Ausfahren einschließt von jedem von: Klappen, Luftbremsen und Fahrwerk, die Position für kritische Energie eine Position darstellt, nach der das Flugzeug unabhängig von der Flugzeugkonfiguration nicht mehr energiestabilisiert am Endanflug-Gate ankommen kann;
Bestimmen, wann sich das Flugzeug nicht auf einer lateralen FMS-Bahn befindet;
Berechnen einer angenommenen lateralen Bahn, wenn sich das Flugzeug nicht auf der lateralen FMS-Bahn befindet;
Erzeugen eines ersten grafischen Benutzeroberflächenobjekts (GUI-Objekts), das die angenommene laterale Bahn darstellt, wenn sich das Flugzeug nicht auf der lateralen FMS-Bahn befindet;
Wiedergeben des ersten GUI-Objekts auf der Navigationsanzeige;
Bestimmen, wann sich das Flugzeug nicht auf einer vertikalen FMS-Bahn befindet;
Berechnen einer angenommenen vertikalen Bahn, wenn sich das Flugzeug nicht auf der vertikalen FMS-Bahn befindet;
Erzeugen eines zweiten grafischen Benutzeroberflächenobjekts (GUI-Objekts), das die angenommene vertikale Bahn darstellt, wenn sich das Flugzeug nicht auf der vertikalen FMS-Bahn befindet;
Wiedergeben der zweiten GUI auf dem VSD;
Auswählen eines Präsentationsstils aus einer Mehrzahl von Präsentationsstilen zum Wiedergeben eines Indikators für optimale Energie und eines Indikators für kritische Energie;
Wiedergeben des Indikators für optimale Energie als Overlay auf dem ersten GUI-Objekt und dem zweiten GUI-Objekt; und
Wiedergeben des Indikators für kritische Energie als Overlay auf dem ersten GUI-Objekt und dem zweiten GUI-Objekt,
wobei das erste GUI-Objekt und das zweite GUI-Objekt zwei von einer Mehrzahl von GUI-Objekten sind, die eine grafische Benutzeroberfläche (GUI) bilden, die von der Steuerungsschaltung auf der Anzeigevorrichtung wiedergegeben wird,
die GUI ferner ein aktuelles Flugzeugpositionssymbol umfasst, das eine aktuelle Position des Flugzeugs angibt, und ferner das Lokalisieren des Indikators für optimale Energie und des Indikators für kritische Energie auf der GUI in relativen Positionen in Bezug auf das aktuelle Flugzeugpositionssymbol und der jeweiligen angenommenen Bahn basierend auf der aktuellen Energiesituation umfasst.

9. Verfahren nach Anspruch 8, wobei der ausgewählte Präsentationsstil für den Indikator für kritische Energie und den Indikator für optimale Energie das Wiedergeben der Indikatoren als einen von einem Bogen, einer Linie, einem Chevron oder einer Raute umfasst.

10. Verfahren nach Anspruch 8, wobei der Indikator für kritische Energie mit einer stärkeren Linienstärke wiedergegeben wird als der Indikator für optimale Energie.

11. Verfahren nach Anspruch 9, das ferner das Implementieren der GUI als grafisches Element auf vorhandenen Anzeigesystemblöcken, als eigenständige Anzeige auf einer vorhandenen Flugzeuganzeige oder als eigenständige Anzeige umfasst, die auf einem elektronischen Pilotenkoffer des Flugzeugs läuft.

12. Verfahren nach Anspruch 10, das ferner das Bestimmen der aktuellen Energiesituation des Flugzeugs basierend auf einer Entfernung von einer aktuellen Position des Flugzeugs zu einem End-Gate oder basierend auf einer Fluggeschwindigkeit des Flugzeugs umfasst.

13. Verfahren nach Anspruch 12, ferner umfassend:
Bestimmen, wann das Flugzeug zum End-Gate abgesunken ist; und
Stoppen des Wiedergebens der Anzeige des Indikators für kritische Energie und des Indikators für optimale Energie, wenn das Flugzeug zum End-Gate abgesunken ist.

## Revendications

1. Système d'affichage de vol permettant de fournir une visualisation d'une trajectoire adoptée de vol latérale et verticale sur un affichage avionique pour un aéronef réalisant une gestion d'énergie lors d'une procédure d'approche, comprenant :
un système de gestion de vol (FMS) ;
une source des données d'état de l'aéronef ;
un dispositif d'affichage apte à rendre un affichage de navigation et un affichage de situation verticale (VSD) ; et
un circuit de commande couplé au FMS, à la source de données d'état de l'aéronef, et au dispositif d'affichage, le circuit de commande étant programmé par des instructions de programmation pour recevoir et traiter les données d'état de l'aéronef et les données de configuration de l'aéronef, pour déterminer une situation énergétique actuelle de l'aéronef, et pour commander le dispositif d'affichage pour rendre l'affichage de navigation et le VSD, le circuit de commande étant en outre programmé :
pour déterminer une position énergétique optimale à la descente, définie en tant qu'une position d'utilisation d'une configuration énergétique optimale à la descente, en fonction de la situation énergétique actuelle ;
pour déterminer une position énergétique critique à la descente, définie en tant qu'une position de passage d'une configuration d'aéronef à une configuration finale, dans lequel la configuration finale représente une configuration de traînée maximale de l'aéronef qui est supérieure à la configuration optimale et implique l'extension de chacun parmi : les volets, les aérofreins et le train d'atterrissage, la position énergétique critique représente une position après laquelle, quelle que soit la configuration de l'aéronef, l'aéronef ne peut plus arriver à la porte d'approche finale de manière stabilisée en énergie ;
pour déterminer quand l'aéronef n'est pas sur une trajectoire latérale FMS ;
pour calculer une trajectoire latérale adoptée lorsque l'aéronef n'est pas sur la trajectoire latérale FMS ;
pour générer un premier objet d'interface utilisateur graphique (GUI) représentant la trajectoire latérale adoptée lorsque l'aéronef n'est pas sur la trajectoire latérale FMS ;
pour rendre le premier objet GUI sur l'affichage de navigation ;
pour déterminer quand l'aéronef n'est pas sur une trajectoire verticale FMS ;
pour calculer une trajectoire verticale adoptée lorsque l'aéronef n'est pas sur la trajectoire verticale FMS ;
pour générer un second objet d'interface utilisateur graphique (GUI) représentant la trajectoire verticale adoptée lorsque l'aéronef n'est pas sur la trajectoire verticale FMS ;
pour rendre la seconde GUI sur le VSD ;
pour sélectionner un style de présentation parmi une pluralité de styles de présentation pour rendre un indicateur d'énergie optimale et un indicateur d'énergie critique ;
pour rendre l'indicateur d'énergie optimale, sous la forme d'un chevauchement, sur chacun du premier objet GUI et du second objet GUI ; et
pour rendre l'indicateur d'énergie critique, sous la forme d'un chevauchement, sur chacun du premier objet GUI et du second objet GUI, dans lequel le premier objet GUI et le second objet GUI sont deux d'une pluralité d'objets GUI constituant une interface utilisateur graphique (GUI) rendue sur le dispositif d'affichage par le circuit de commande, la GUI comprend en outre un symbole de position actuelle de l'aéronef indiquant une position actuelle de l'aéronef, et dans lequel :
le circuit de commande est en outre programmé pour localiser l'indicateur d'énergie optimale et l'indicateur d'énergie critique sur la GUI dans des positions relatives par rapport au symbole de position actuelle de l'aéronef et au trajet adopté respectif, en fonction de la situation énergétique actuelle.

2. Système d'affichage de vol selon la revendication 1, dans lequel le circuit de commande détermine la situation énergétique actuelle de l'aéronef en fonction d'une distance entre une position actuelle de l'aéronef et une porte finale ou en fonction d'une vitesse anémométrique de l'aéronef.

3. Système d'affichage de vol selon la revendication 1, dans lequel la GUI est implémentée en tant qu'un élément graphique sur des blocs de système d'affichage existants, en tant qu'un affichage autonome sur un affichage d'aéronef existant, ou en tant qu'un affichage autonome s'exécutant sur une sacoche électronique de vol de l'aéronef.

4. Système d'affichage de vol selon la revendication 1, dans lequel le style de présentation sélectionné pour l'indicateur d'énergie critique et l'indicateur d'énergie optimale comprend le rendu des indicateurs sous la forme d'un arc et/ou d'une ligne et/ou d'un chevron et/ou d'un losange.

5. Système d'affichage de vol selon la revendication 4, dans lequel l'indicateur d'énergie critique est rendu avec une épaisseur de trait supérieure à celle de l'indicateur d'énergie optimale.

6. Système d'affichage de vol selon la revendication 4, dans lequel le circuit de commande est en outre configuré :
pour déterminer quand l'aéronef est descendu jusqu' à la porte finale ; et
pour arrêter de rendre l'indicateur d'énergie critique et l'indicateur d'énergie optimale lorsque l'aéronef est descendu jusqu'à la porte finale.

7. Système d'affichage de vol selon la revendication 4, dans lequel le circuit de commande est en outre configuré :
pour déterminer quand l'aéronef est monté à 1 000 pieds (0,3048 km) au-dessus du niveau de l'aérodrome (AAL) à la porte finale ; et
pour arrêter de rendre l'indicateur d'énergie critique et l'indicateur d'énergie optimale lorsque l'aéronef est descendu jusqu'à 1 000 pieds (0,3048 km) AAL à la porte finale.

8. Procédé de fourniture d'une visualisation d'une trajectoire adoptée de vol latérale et verticale sur un affichage avionique pour un aéronef réalisant une gestion d'énergie lors d'une procédure d'approche, comprenant :
au niveau d'un circuit de commande programmé par des instructions de programmation,
la réception et le traitement des données d'état de l'aéronef et des données de configuration de l'aéronef, la détermination d'une situation énergétique actuelle de l'aéronef et la commande d'un dispositif d' affichage pour rendre un affichage de navigation et un VSD ;
la détermination d'une position énergétique optimale à la descente, définie en tant qu'une position, à partir de laquelle l'aéronef décélérera jusqu'à une vitesse pour un passage à une configuration optimale ;
la détermination d'une position énergétique critique à la descente, définie en tant qu'une position à partir de laquelle l'aéronef décélérera jusqu' à une vitesse de passage à la configuration critique, dans lequel la configuration critique représente une configuration de traînée maximale de l'aéronef, laquelle est supérieure à la configuration optimale et implique l'extension de chacun parmi : les volets, les aérofreins et le train d'atterrissage, la position énergétique critique représente une position après laquelle, quelle que soit la configuration de l'aéronef, l'aéronef ne peut plus arriver à la porte d'approche finale de manière stabilisée en énergie ;
la détermination de lorsque l'aéronef n'est pas sur une trajectoire latérale FMS ;
le calcul d'une trajectoire latérale adoptée lorsque l'aéronef n'est pas sur la trajectoire latérale FMS ;
la génération d'un premier objet d'interface utilisateur graphique (GUI) représentant la trajectoire latérale adoptée lorsque l'aéronef n'est pas sur la trajectoire latérale FMS ;
le rendu du premier objet GUI sur l'affichage de navigation ;
la détermination de lorsque l'aéronef n'est pas sur une trajectoire verticale FMS ;
le calcul d'une trajectoire verticale adoptée lorsque l'aéronef n'est pas sur la trajectoire verticale FMS ;
la génération d'un second objet d'interface utilisateur graphique (GUI) représentant la trajectoire verticale adoptée lorsque l'aéronef n'est pas sur la trajectoire verticale FMS ;
le rendu de la seconde GUI sur le VSD ;
la sélection d'un style de présentation parmi une pluralité de styles de présentation pour rendre un indicateur d'énergie optimale et un indicateur d'énergie critique ;
le rendu de l'indicateur d'énergie optimale, sous la forme d'un chevauchement, sur chacun du premier objet GUI et du second objet GUI ; et
le rendu de l'indicateur d'énergie critique, sous la forme d'un chevauchement, sur chacun du premier objet GUI et du second objet GUI,
dans lequel le premier objet GUI et le second objet GUI sont deux d'une pluralité d'objets GUI constituant une interface utilisateur graphique (GUI) rendue sur le dispositif d'affichage par le circuit de commande,
la GUI comprend en outre un symbole de position actuelle de l'aéronef indiquant une position actuelle de l'aéronef, et comprend en outre la localisation de l'indicateur d'énergie optimale et de l'indicateur d'énergie critique sur la GUI dans des positions relatives par rapport au symbole de position actuelle de l'aéronef et à la trajectoire adoptée respective, en fonction de la situation énergétique actuelle.

9. Procédé selon la revendication 8, dans lequel le style de présentation sélectionné pour l'indicateur d'énergie critique et l'indicateur d'énergie optimale comprend le rendu des indicateurs sous la forme d'un arc et/ou d'une ligne et/ou d'un chevron et/ou d'un losange.

10. Procédé selon la revendication 8, dans lequel l'indicateur d'énergie critique est rendu avec une épaisseur de trait supérieure à celle de l'indicateur d'énergie optimale.

11. Procédé selon la revendication 9, comprenant en outre l'implémentation de la GUI en tant qu'un élément graphique sur des blocs de système d'affichage existants, en tant qu'un affichage autonome sur un affichage d'aéronef existant, ou en tant qu'un affichage autonome s'exécutant sur une sacoche électronique de vol de l'aéronef.

12. Procédé selon la revendication 10, comprenant en outre la détermination de la situation énergétique actuelle de l'aéronef en fonction d'une distance entre une position actuelle de l'aéronef et une porte finale ou en fonction d'une vitesse anémométrique de l'aéronef.

13. Procédé selon la revendication 12, comprenant en outre :
la détermination de lorsque l'aéronef est descendu jusqu'à la porte finale ; et
l'arrêt du rendu de l'indicateur d'énergie critique et de l'indicateur d'énergie optimale lorsque l'aéronef est descendu jusqu'à la porte finale.
